Europäisches Patentamt

European Patent Office

Office européen des brevets

(19)

(11) EP 0 870 180 B1

(12) FASCICULE DE BREVET EUROPEEN

(45) Date de publication et mention
de la délivrance du brevet:
**05.12.2001 Bulletin 2001/49**

(21) Numéro de dépôt: **97910494.0**

(22) Date de dépôt: **16.10.1997**

(51) Int Cl.⁷: $G01J\ 4/00$

(86) Numéro de dépôt international:
**PCT/FR97/01849**

(87) Numéro de publication internationale:
**WO 98/19142 (07.05.1998 Gazette 1998/18)**

(54) **COMPOSANT OPTIQUE DE MODULATION DE POLARISATION, ET SON UTILISATION DANS UN POLARIMETRE OU DANS UN ELLIPSOMETRE**

OPTISCHES BAUELEMENT ZUR POLARISATIONSMODULATION, UND DESSEN VERWENDUNG IN EINEM POLARIMETER ODER ELLIPSOMETER

OPTICAL COMPONENT OF POLARIZING MODULATION, AND ITS USE IN A POLARIMETER OR IN AN ELLIPSOMETER

(84) Etats contractants désignés:
**AT BE CH DE DK ES FI FR GB GR IE IT LI LU MC NL PT SE**

(30) Priorité: **25.10.1996 FR 9613081**

(43) Date de publication de la demande:
**14.10.1998 Bulletin 1998/42**

(73) Titulaire: **CENTRE NATIONAL DE LA RECHERCHE SCIENTIFIQUE
75016 Paris Cédex (FR)**

(72) Inventeurs:
• **DREVILLON, Bernard
F-92140 Clamart (FR)**
• **COMPAIN, Eric
F-37420 Huismes (FR)**

(74) Mandataire: **Michelet, Alain et al
Cabinet Harlé et Phélip
7, rue de Madrid
75008 Paris (FR)**

(56) Documents cités:
**US-A- 4 306 809**

• **LEST Technical Report No. 54, Institute of Theoretical Astrophysics, University of Oslo, 1992 XP000645515**
• **H. POVEL: "Imaging Stokes polarimetry with piezoelastic modulators and charge-coupled device image sensors" OPTICAL ENGINEERING, vol. 34, no. 7, juillet 1995, BELLINGHAM US, pages 1870-1878, XP000517055**
• **P.S. HAUGE: "Recent developments in instrumentation in ellipsometry" SURFACE SCIENCE, vol. 96, 1980, pages 108-140, XP000195533 cité dans la demande**
• **R.M.A. AZZAM ET AL: "Construction, calibration and testing of a four-detector photopolarimeter" REVIEW OF SCIENTIFIC INSTRUMENTS, vol. 59, no. 1, janvier 1988, NEW YORK US, pages 84-88, XP002034814**
• **R.C. THOMPSON ET AL: "Measurement of polarized light interactions via the Mueller matrix" APPLIED OPTICS, vol. 19, no. 8, 15 avril 1980, NEW YORK US, pages 1323-1332, XP002034815 cité dans la demande**

EP 0 870 180 B1

**Description**

La présente invention a pour objet un composant optique de modulation, un polarimètre et un ellipsomètre de Mueller comprenant un tel composant optique, un procédé de calibrage de cet ellipsomètre et un procédé de mesure ellipsométrique.

Pour mesurer des grandeurs représentatives d'un échantillon, telles que des grandeurs optiques, physiques, chimiques ou électriques, il est classique d'avoir recours à l'ellipsométrie. Le champ d'application de l'ellipsométrie standard est cependant restreint à des matériaux non dépolarisants, isotropes et présentant une interface plane. L'ellipsométrie généralisée permet de mesurer des matériaux non isotropes, mais seulement s'ils sont non dépolarisants. Or, les besoins courants des industriels, des biologistes et des chimistes portent souvent sur des matériaux dépolarisants, par exemple rugueux ou particulaires.

L'ellipsométrie de Mueller ou MME (Mueller Matrix Ellipsometry) rend possible la mesure de tout milieu. En effet, les états de polarisation de la lumière peuvent être représentés par un vecteur de dimension 4, qui est classiquement le vecteur de Stokes S de la lumière. On en trouvera par exemple une description dans l'ouvrage de Azzam et Bashara, « Ellipsometry and polarized light », North-Holland, pp. 55-60. Le vecteur de Stokes comprend les coordonnées I, Q, U, V, respectivement représentatives des intensités moyennes de quatre états de polarisation différents. Tout milieu peut alors être représenté par une matrice réelle de dimensions 4 x 4 qui décrit les couplages en intensités des différents modes de polarisation de la lumière, ces couplages étant provoqués par l'interaction de la lumière avec le milieu. Cette matrice, dite matrice de Mueller M, comprend seize coefficients en général indépendants les uns des autres. L'ellipsométrie de Mueller revient à mesurer la matrice de Mueller complète du milieu étudié. Elle est ainsi notamment applicable à des dépôts sur surfaces rugueuses ou des mesures de particules, auxquels les autres procédés de mesure ellipsométrique ne sont pas appropriés.

Les dispositifs utilisés pour l'ellipsométrie de Mueller, ou ellipsomètres de Mueller comprennent communément une source lumineuse, un générateur d'états de polarisation ou PSG (Polarization States Generator) et un détecteur d'états de polarisation ou PSD (Polarization States Detector), également appelé polarimètre. On en trouvera une description détaillée dans l'article de P.S. Hauge, « Recent developments in instrumentation in ellipsometry », Surface Science, vol. 96, pp. 108-140, 1980. En fonctionnement, on émet un faisceau lumineux avec la source, on donne au faisceau des états de polarisation avec le PSG, on envoie le faisceau sur l'échantillon à mesurer, puis on détecte le faisceau obtenu avec le PSD. Il est connu d'utiliser des polariseurs et des lames quart d'onde fixes dans le PSG et le PSD en leur donnant seize configurations différentes pour mesurer la matrice de Mueller de l'échantillon. Cette technique manuelle est cependant d'utilisation difficile et peu efficace.

Il a été proposé dans « Photopolarimetric measurement of the Mueller matrix by Fourier analysis of a single detected signal », R. M. Azzam, Optics Letters, vol. 2, num. 6, pp. 148-150, 1978, un ellipsomètre de Mueller dans lequel le PSG et le PSD comprennent respectivement deux lames quart d'onde tournant à ω et 5 ω. Les seize coefficients de la matrice de Mueller sont alors extraits des seize premiers harmoniques de la fréquence ω du signal détecté. Ce dispositif a pour inconvénients d'être restreint à de très basses fréquences et de nécessiter l'usage d'un découpeur (chopper) pour éliminer le bruit de fond ambiant.

Il a aussi été proposé, notamment dans « Mueller-matrix measurement using the four-detector photopolarimeter », R. M. Azzam, Optics Letters, Vol. 11, num. 5, pp. 270-272, 1986, des ellipsomètres de Mueller avec PSD multivoies, et un retardateur tournant dans le PSG. Ces dispositifs sont également limités à de basses fréquences de modulation, nécessitant typiquement plusieurs secondes d'acquisition.

Il a aussi été proposé dans « Measurement of Mueller matrices », par R. Anderson, Applied Optics, vol. 31, p. 11, 1992, un eilipsomètre de Mueller monovoie comportant un modulateur de polarisation haute fréquence dans le PSG et le PSD. Cependant, plusieurs configurations doivent être combinées pour obtenir une mesure complète.

Un ellipsomètre de Mueller hautes fréquences a été envisagé dans « Measurement of polarized light interactions via the Mueller matrix », Randall C. Thompson et al., Applied Optics, Vol. 19, num. 8, pp. 1323-1332, 1980 : il utilise quatre modulateurs de phases électro-optiques à différentes fréquences et seize synchro-détections. Ce dispositif présente les inconvénients d'être cher et compliqué à mettre à oeuvre, ainsi que d'être sensible au bruit car la composante continue du signal n'est pas modulée.

L'article de LEST Technical Report par Stenflo et al., N° 54, XP000645515, 1992, et celui de la revue Optical Engineering par Povel, vol. 34, N° 7, XP000517055, pp. 1870-1878, divulguent un système de mesure simultanée des quatre paramètres de Stokes et son application à la polarimétrie. Le système de mesure comprend deux modulateurs piézo-élastiques, travaillant à la même fréquence, couplés en phase et ayant un écart angulaire de leurs orientations égal à 45°, une plaque super-achromatique λ/4 et un polariseur linéaire, les modulateurs, la plaque et le polariseur étant successivement disposés sur un chemin optique.

Ce système pose des problèmes de synchronisation des modulateurs et de contrôle de leur couplage. De plus, il présente l'inconvénient d'être sensible au bruit.

La présente invention vise un ellipsomètre de Mueller permettant des modulations hautes fréquences, simple à mettre en oeuvre et donnant des mesures simultanées et précises des seize coefficients de la matrice de Mueller

L'invention vise également un tel ellipsomètre qui puisse, séparément ou cumulativement, être insensible au bruit ambiant, offrir des capacités spectroscopiques, permettre des modulations à des fréquences aussi élevées que 100 MHz et être utilisable pour des mesures en temps réel par exemple de croissance de couches sur substrat.

De plus, l'invention a pour objectif un procédé de calibrage d'un ellipsomètre de Mueller visé par l'invention, ce procédé étant à la fois précis, rapide et facile à mettre en oeuvre.

L'invention a aussi pour but un procédé de mesure ellipsométrique de Mueller simple à mettre en oeuvre et donnant des mesures simultanées et précises des seize coefficients de la matrice de Mueller, pouvant être mis en oeuvre à de hautes fréquences de modulation.

L'invention vise également un composant optique de modulation qui puisse être utilisé dans le PSG, et éventuellement aussi dans le PSD, d'un ellipsomètre de Mueller. Plus généralement, l'invention a pour but un composant optique de modulation permettant des modulations hautes fréquences et simple à mettre en oeuvre.

L'invention vise aussi un PSD ou polarimètre utilisable dans tout dispositif nécessitant la mesure de la polarisation de la lumière, notamment dans un ellipsomètre de Mueller, pouvant être mis en oeuvre à de hautes fréquences et d'utilisation simple.

A cet effet, l'invention a pour objet un composant optique de modulation de polarisation comprenant un modulateur de polarisation qui module un faisceau incident de lumière polarisée linéairement et renvoie un faisceau modulé. Le modulateur de polarisation est un modulateur de phase couplé modulant le faisceau incident deux fois successivement, les deux modulations étant strictement à la même fréquence $\omega/2\pi$ et étant couplées.

Selon l'invention, les modulations sont couplées par un système modifiant l'état de polarisation de la lumière entre les deux modulations.

Les deux modulations sont « strictement » à la même fréquence au sens où elles ont entre elles un déphasage relatif qui est fixe dans le temps, et ne subissent donc pas de dérive l'une par rapport à l'autre. Cette identité stricte est préférentiellement obtenue par un asservissement extérieur ou par l'utilisation double d'un même modulateur.

Par « modulations couplées », on entend des modulations identiques (c'est-à-dire ayant une même fréquence et un déphasage relatif fixe dans le temps) qui ne sont pas réductibles à une unique modulation de phase. Ainsi, les deux modulations ne s'appliquent pas aux mêmes composantes du vecteur de Stokes. Plus précisément, chaque modulation de phase étant appliquée selon un sous-espace vectoriel à deux dimensions de l'espace vectoriel de polarisation à quatre dimensions dans lequel est défini le vecteur de Stokes du faisceau incident, les deux sous-espaces associés respectivement aux deux modulations ne sont pas confondus.

Les modulations sont couplées au moyen d'un système de couplage, et non par un simple écart angulaire entre les directions de modulation.

Préférentiellement, le système de couplage est du type polariseur partiel et déphaseur ou PPS (Partial Polarizer and phase Shifter).

Le modulateur de phase est dit « couplé » par référence aux deux modulations de phase couplées qu'il applique.

En termes mathématiques, le composant optique applique une modulation de polarisation telle que le vecteur de Stokes S du faisceau modulé s'exprime linéairement en fonction d'une base harmonique de la pulsation $\omega$ par une matrice de rang 4.

Selon un mode préféré de réalisation du composant optique selon l'invention, le modulateur couplé comprend un modulateur de phase produisant les deux modulations successives et un système de couplage du type polariseur partiel et déphaseur. Le modulateur de phase produit la première modulation et envoie le faisceau incident vers le système de couplage, le système de couplage renvoie le faisceau incident vers le modulateur de phase et le modulateur de phase produit la seconde modulation.

Ce mode de réalisation est particulièrement avantageux en ce qu'il permet de moduler à haute fréquence les quatre composantes du vecteur de Stokes, y compris l'intensité moyenne I. En conséquence, lorsqu'il est utilisé dans un PSG, il offre un bas niveau de détection et rend inutile l'emploi d'un découpeur (chopper).

De plus, il nécessite un unique modulateur de phase pour effectuer les deux modulations. Il évite ainsi les problèmes de synchronisation impliquant une commande de phase absolue. Il permet notamment d'employer un modulateur photoélastique, qui fournit une gamme de longueurs d'onde étendue (de 0,2 $\mu$m à 19 $\mu$m), une grande fenêtre optique (supérieure à 1 cm) et une faible dépendance à des variations de température.

Préférentiellement dans ce mode de réalisation, la lumière du faisceau incident étant polarisée linéairement selon une direction de polarisation, le modulateur de phase et le système de couplage sont orientés respectivement à 45° et 90° de la direction de polarisation.

Dans un autre mode de réalisation préféré du composant optique selon l'invention, le modulateur couplé comprend deux modulateurs de phase produisant respectivement les deux mêmes modulations successives, les deux modulateurs de phase ayant une même orientation, et un système de couplage du type polariseur partiel et déphaseur interposé entre les deux modulateurs de phase. Le système de couplage envoie le faisceau incident du premier vers le second des modulateurs de phase.

Les deux modulateurs de phase sont préférentiellement électro-optiques.

Cet autre mode de réalisation permet de moduler à haute fréquence les quatre composantes du vecteur de Stokes, comme le premier mode de réalisation.

En exprimant que le système de couplage « envoie » le faisceau incident, on entend qu'il peut soit le transmettre, soit le réfléchir.

Préférentiellement dans cet autre mode de réalisation, la lumière du faisceau incident étant polarisée linéairement selon une direction de polarisation, les modulateurs de phase, d'une part, et le système de couplage d'autre part, sont orientés respectivement à 45° et 90° de la direction de polarisation.

Avantageusement, le système de couplage fonctionne en réflexion et comporte un premier élément de polarisation partielle et un second élément de déphasage et de réflexion. Selon une forme préférée de ce système de couplage, le premier élément est constitué par un empilement d'interfaces air-verre à l'angle de Brewster et le second élément est constitué par un prisme.

L'invention a aussi pour objet un polarimètre comprenant un composant optique selon l'invention.

Un tel PSD ou polarimètre peut être employé par exemple dans un ellipsomètre de Mueller, le PSG comprenant un modulateur de polarisation.

L'invention concerne également un ellipsomètre de Mueller destiné à la mesure d'un échantillon représenté par des coefficients d'une matrice de Mueller. L'ellipsomètre comprend:

- une source lumineuse émettant un faisceau lumineux incident,
- un polariseur polarisant linéairement le faisceau incident,
- un modulateur de polarisation modulant le faisceau incident, l'échantillon recevant le faisceau incident modulé et renvoyant un faisceau de mesure,
- des moyens de détection du faisceau de mesure produisant des signaux électriques, et
- une unité de traitement recevant les signaux électriques produits par les moyens de détection.

Selon l'invention, le modulateur de polarisation est inclus dans un composant optique selon l'invention. De plus, les moyens de détections comportent un polarimètre comportant des moyens de détection permettant de produire n quantités mesurées représentant les états de polarisation du faisceau de mesure et en ce que l'unité de traitement comporte des moyens permettant de produire par transformée de Fourier m valeurs pour chacune des n quantités mesurées, avec n x m ≥ 16 et m ≥ 4, permettant d'accéder aux seize coefficients de la matrice de Mueller.

L'ellipsomètre de Mueller selon l'invention repose donc sur des modulations de phase à une fréquence unique. Il permet de s'affranchir de tout élément tournant et d'effectuer des mesures à hautes fréquences, ainsi que d'obtenir une mise en oeuvre simple et des résultats précis. De plus, il peut facilement être adapté sur des systèmes existants d'ellipsométrie classique à modulation de phase et tirer profit des techniques de traitement numérique qui y sont usuellement employées.

La source lumineuse et le polariseur doivent être considérés comme équivalant à une source de lumière polarisée linéairement.

Les moyens de détection peuvent inclure un ou plusieurs photodétecteurs. Dans le premier cas (technique monovoie), n = 1 et m ≥ 16 et le polarimètre comprend un système de modulation de la polarisation. Ce système de modulation peut notamment être le composant optique selon l'invention. L'intensité lumineuse détectée est alors dépendante du temps. Le second cas est celui d'une technique multivoie, avantageuse notamment pour effectuer la mesure simultanée des coefficients en n'utilisant qu'une seule modulation de polarisation dans le PSG. Le polarimètre peut alors séparer le faisceau de mesure en plusieurs faisceaux secondaires, chacun ayant un état de polarisation distinct et étant détecté par un des photodétecteurs, ou produire des réflexions consécutives du faisceau de mesure sur différents photodétecteurs. De préférence, le PSD ou polarimètre a une structure telle qu'il n'introduit pas de nouvelle modulation temporelle, les quantités mesurées étant liées linéairement aux quatre composantes du vecteur de Stokes.

Les quantités mesurées dépendent du temps et sont habituellement des intensités mesurées par le ou les photodétecteurs.

Il est avantageux de choisir des harmoniques de la pulsation ω et de calculer avec l'unité de traitement les composantes harmoniques d'ordres correspondants de chacune des quantités mesurées. Les valeurs produites sont alors les coordonnées harmoniques des quantités mesurées selon les composantes harmoniques fixées. Le nombre minimal de coordonnées harmoniques par quantité mesurée pour obtenir les seize coefficients de la matrice de Mueller est 4, un nombre supérieur de coordonnées harmoniques impliquant des redondances dans la détermination de ces coefficients.

Le produit de la matrice de Mueller M par le vecteur de Stokes $S_1$ du faisceau incident sur l'échantillon est égal au vecteur de Stokes $S_2$ du faisceau de mesure émergeant de l'échantillon.

Le PSG de l'ellipsomètre de Mueller est constitué par le polariseur et par le modulateur de polarisation, tandis que le PSD est constitué par les moyens de détection. Le PSG et le PSD ont respectivement une matrice de modulation W et une matrice de détection A, cette dernière pouvant ou non varier dans le temps. Les harmoniques de la pulsation ω fixés pour le calcul des valeurs produites étant regroupés dans un vecteur harmonique H, le produit de la matrice de modulation W par le vecteur harmonique H donne le vecteur de Stokes $S_1$ du faisceau incident sortant du PSG. Dans le cas multivoie, les quantités mesurées étant regroupées dans un vecteur quantité P, le produit de la matrice de détection A par le vecteur de Stokes $S_2$ du faisceau de mesure renvoyé par l'échantillon est égal au vecteur quantité P. On a ainsi, en indiquant la dépendance au temps t de P et H :

$$P(t) = (AMW) H(t)$$

En présence de modulateur(s) électro-optique(s), produisant un déphasage $\delta(t) = \omega t$, le vecteur harmonique H(t) s'écrit :

$$H(t) = \begin{pmatrix} \cos \omega t \\ \sin \omega t \\ \cos(2\omega t) \\ \sin(2\omega t) \end{pmatrix}$$

En présence de modulateur(s) photoélastique(s), produisant un déphasage $\delta(t) = A_0 \sin(\omega t)$, il vaut :

$$H(t) = \begin{pmatrix} \cos(A_0 \sin \omega t) \\ \sin(A_0 \sin \omega t) \\ \cos(2A_0 \sin \omega t) \\ \sin(2A_0 \sin \omega t) \end{pmatrix}$$

où $A_0$ est une constante fixée par le ou les modulateur(s) photoélastique(s) (amplitude de modulation).

Préférentiellement, $A_0 = 2,791$. Pour cette valeur, les composantes du vecteur harmonique H(t) sont les plus indépendantes.

Lorsque le nombre de composantes harmoniques pour chacune des quantités mesurées est égal à m, les matrices W, M et A ont respectivement pour dimensions 4 x m, 4 x 4 et n x 4.

Dans le cas monovoie (n = 1), le PSG et le PSD peuvent correspondre indifféremment à l'un des modes de réalisation décrits précédemment, le PSD modulant la polarisation à une fréquence 5 fois supérieure ou inférieure à celle du PSG.

L'ellipsomètre étant de Mueller, la matrice de modulation W est nécessairement de rang 4 ($W^TW$ inversible), le PSG est alors dit complet. La matrice de détection A doit être aussi de rang 4, dans le cas où elle est invariante dans le temps.

Préférentiellement, n ≥ 4 et le polarimètre a une structure telle qu'il n'introduit pas de nouvelle modulation temporelle.

Ainsi, on s'affranchit de modulations dans le PSD, la matrice de détection A étant alors invariante au cours du temps et de rang 4. De la sorte, l'ellipsomètre procure une grande simplicité d'utilisation et des capacités hautes fréquences (pas d'éléments mobiles), permet de tirer pleinement profit des techniques multivoies existantes et est particulièrement efficace et facile à mettre en oeuvre.

Dans une forme avantageuse de cette réalisation préférée, n = 4 et m = 4, et le polarimètre sépare les quatre états de polarisation du faisceau de mesure associés aux quatre quantités mesurées.

Cette forme avantageuse correspond à la configuration minimale n'introduisant pas de modulation en sortie.

L'ellipsomètre comprenant dans le PSG un composant optique selon l'invention, les quatre valeurs produites par transformée de Fourier pour chaque quantité mesurée dépendant du temps t sont alors avantageusement les coordonnées harmoniques de cette quantité mesurée dans la base :

cos $\omega t$, sin $\omega t$, cos 2 $\omega t$, sin 2 $\omega t$.

On conserve ainsi les harmoniques d'ordres 1 et 2, sans avoir besoin de garder l'harmonique d'ordre 0, puisque l'intensité moyenne est modulée.

De manière préférée, m coordonnées harmoniques $H\ell(t)$ de calcul dépendant du temps t étant regroupées dans un vecteur harmonique H(t), l'unité de traitement a une structure telle qu'il produit les m valeurs pour chacune des n quantités mesurées $I_h(t)$ au moyen d'une transformée de Fourier spéciale selon laquelle, l'intervalle $[0,2\pi/\omega]$ étant discrétisé en 2N points $T_K$ équi-répartis et la quantité mesurée $I_h(t)$ étant calculée à des instants d'échantillonnage $t_k$, pour k variant de 0 à 2N-1, l'unité de traitement évalue la j-ème composante harmonique $B_{hj}$ de la fonction $I_h$, pour j variant de 1 à m et h variant de 1 à n par :

$$B_{hj} = \frac{1}{2N} \sum_{k=0}^{2N-1} I_h(t_k) g_j(T_k)$$

les fonctions $g_j(t)$ étant des fonctions de démodulation choisies telles que la matrice D de démodulation donnée par :

$$D_{\ell j} = \frac{1}{2N} \sum_{k=0}^{2N-1} H_\ell(t_k) g_j(T_k)$$

pour ℓ et j variant de 1 à m, est de rang ≥ 4.

Ainsi, le produit de B par l'inverse de D permet d'obtenir directement la matrice AMW, puis d'extraire la matrice de Mueller M. Cette transformée de Fourier spéciale ou SFFT (Special Fast Fourier Transform) évite les problèmes de singularités posés par la présence d'un modulateur photoélastique et peut, d'une manière générale, permettre d'améliorer la précision des résultats.

Dans une première forme de la SFFT, notée SFFT1, les moyens de l'unité de traitement permettent d'appliquer une modulation de phase ayant un même déphasage δ(t), avec :

$$\delta(t_k) = \omega T_k$$

$$g_j(T_k) = \exp(-ij\omega T_k)$$

avec $i^2 = -1$.

Ainsi, dans cette SFFT1, les points $t_k$ d'échantillonnage ne sont pas équi-répartis, de telle sorte que les mesures doivent être déclenchées sur chaque période à des instants précis prédéterminés. Par rapport à une FFT classique, la SFFT1 requiert donc une adaptation des éléments matériels de l'unité de traitement (hardware), mais permet de conserver le même logiciel (software).

La SFFT1 permet d'obtenir un déphasage δ(t) égal à ωt (modulo 2π) sur une période, quels que soient les modulateurs de phase employés. Elle donne des résultats très précis tout en évitant l'apparition de singularités.

Dans une seconde forme de la SFFT, notée SFFT2, les moyens de l'unité de traitement sont structurés de tel manière que

$$t_k = T_k,$$

et

g_j tels que D est la matrice identité.

Les fonctions de démodulation $g_j(t)$ constituent ainsi la base duale des coordonnées harmoniques $H_\ell(t)$ de calcul. La nature des fonctions $g_j$ diffère donc, selon que le modulateur de polarisation comporte des modulateurs électro-optiques ou photoélastiques.

La SFFT2 permet de garder inchangé le matériel (hardware) par rapport à une FFT classique, du fait que les points $t_k$ d'échantillonnage sont équi-répartis. Elle nécessite en revanche une modification du logiciel (software) de l'unité de traitement.

La démodulation obtenue avec la SFFT2 donne un rapport signal sur bruit optimal et une diaphonie (cross-talk) minimale.

Les moyens de détection et l'unité de traitement sont avantageusement adaptés à des mesures spectroscopiques.

L'invention a aussi pour objet un procédé de calibrage de l'ellipsomètre selon l'invention. Le polariseur et le modulateur de polarisation constituant un générateur d'états de polarisation, et le générateur d'états de polarisation et les moyens de détection ayant respectivement une matrice de modulation et une matrice de détection:

- on choisit un ensemble d'entités de calibrage ayant des matrices de Mueller connues, l'une de ces entités correspondant à la matrice identité,
- pour chacune des entités de calibrage, on adopte cette entité comme échantillon dans l'ellipsomètre, on émet un faisceau lumineux incident polarisé linéairement avec la source lumineuse et le polariseur, on module le faisceau incident par le modulateur couplé, on envoie le faisceau incident modulé sur l'entité et on renvoie un faisceau de mesure, on produit les quantités mesurées par les moyens de détection et les valeurs par l'unité de traitement et on construit, à partir de ces valeurs, une matrice mesurée produit des matrices de détection, de Mueller de l'entité et de modulation,
- on établit un système d'équations linéaires à partir des matrices mesurées, et
- on résout ce système de façon à extraire les matrices de modulation et de détection.

Effectuer une mesure avec l'entité correspondant à la matrice identité revient à ne mettre aucun échantillon entre le PSG et le PSD.

La mesure des matrices de modulation W et de détection A est ainsi effectuée de manière automatique grâce à ce procédé d'autocalibrage. On obtient des résultats précis d'une façon rapide et simple, sans avoir notamment à démonter le dispositif.

Dans une mise en oeuvre avantageuse du procédé de calibrage selon l'invention, on choisit un ensemble d'entités comprenant :

- un polariseur linéaire à 0° en transmission,
- un polariseur linéaire à 45° en transmission, et
- un polariseur partiel et déphaseur sans valeurs singulières.

Ce procédé de calibrage est particulièrement approprié au cas où le PSD sépare le faisceau de mesure en quatre états de polarisation (n = 4) et où on détermine pour chacune des intensités détectées associées, quatre valeurs correspondant aux premiers harmoniques.

L'invention concerne également un procédé de mesure ellipsométrique de Mueller destinée à la mesure d'un échantillon représenté par des coefficients d'une matrice de Mueller. Dans ce procédé :

- on émet un faisceau lumineux incident polarisé linéairement,

- on module le faisceau incident par un modulateur de polarisation,
- on envoie sur l'échantillon le faisceau incident modulé et on renvoie un faisceau de mesure,
- on détecte le faisceau de mesure et on produit des signaux électriques, par des moyens de détection, et
- on transmet les signaux électriques à une unité de traitement.

Selon l'invention :

- on applique deux modulations de phase successives au faisceau incident au moyen du modulateur de polarisation, les deux modulations étant strictement à la même fréquence $\omega/2\pi$ et étant couplées par un système modifiant l'état de polarisation de la lumière entre les deux modulations,
- on produit n quantités mesurées représentant les états de polarisation du faisceau de mesure, par les moyens de détection,
- on produit par transformée de Fourier m valeurs pour chacune des n quantités mesurées au moyen de l'unité de traitement, avec n x m $\geq$ 16 et m $\geq$ 4, permettant d'accéder aux seize coefficients de la matrice de Mueller.

Ce procédé permet de mesurer à haute fréquence la matrice de Mueller complète de l'échantillon, avec précision et d'une manière simple.

La démodulation peut être effectuée par une transformée de Fourier rapide ou FFT (Fast Fourier Transform) standard ou par la SFFT. Cette dernière améliore la précision en présence de modulateurs électro-optiques et rend possible le calcul des m valeurs en présence de modulateurs photoélastiques.

La présente invention sera illustrée par la description qui suit à l'aide d'exemples de réalisation du composant optique, du polarimètre et de l'ellipsomètre de Mueller selon l'invention, et de mise en oeuvre des procédés de calibrage et de mesure ellipsométrique selon l'invention, donnés à titre indicatif et nullement limitatif, en référence aux dessins annexés :

- La Figure 1 est un schéma de principe d'un ellipsomètre de Mueller selon l'invention ;
- La Figure 2 schématise le PSG d'un premier mode de réalisation de l'ellipsomètre de Mueller selon l'invention ;
- La Figure 3 montre, un dispositif correspondant au PSG de la Figure 2 ;
- La Figure 4 réprésente le PSD du premier mode de réalisation de l'ellipsomètre de Mueller ;
- La Figure 5 schématise l'ensemble de l'ellipsomètre de Mueller selon le premier mode de réalisation des Figures 2 à 4, en faisant ressortir les systèmes de commande et de traitement ;
- La Figure 6 représente une évolution temporelle du déphasage et un échantillonnage d'acquisition employés dans le montage de la Figure 5 ;
- La Figure 7 montre le PSG d'un deuxième mode de réalisation de l'ellipsomètre de Mueller selon l'invention ;
- La Figure 8 représente une évolution temporelle du déphasage et un échantillonnage d'acquisition employés avec le deuxième mode de réalisation de l'ellipsomètre correspondant à la Figure 7 ;
- La Figure 9 représente une autre forme de réalisation du PPS que celle de la Figure 7.

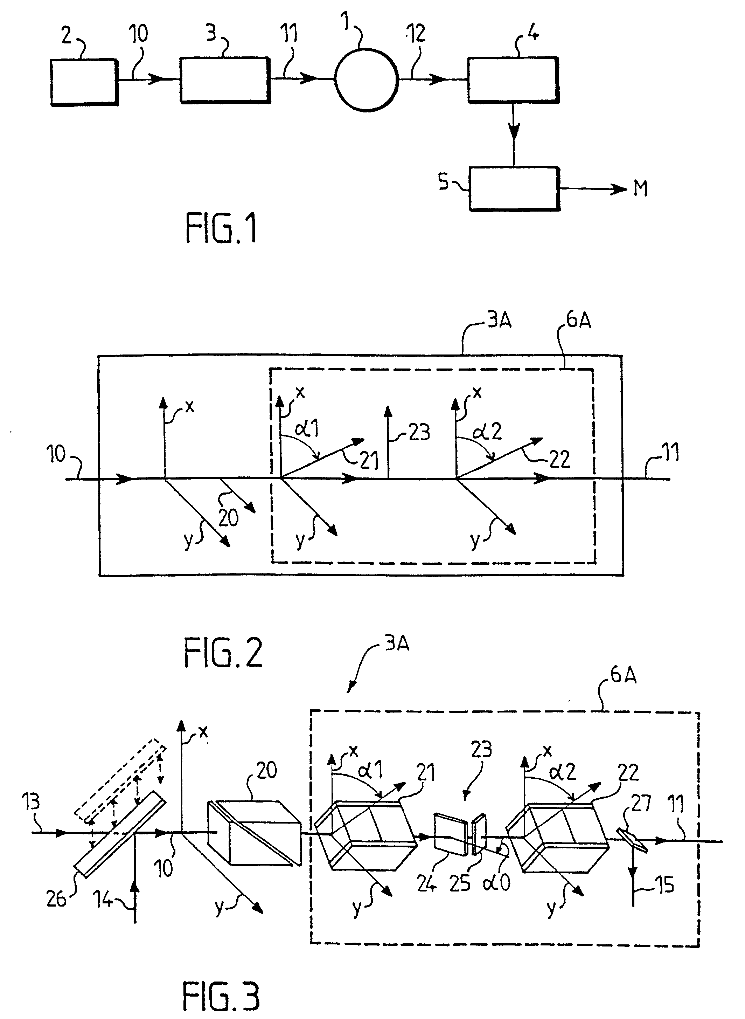

Un ellipsomètre de Mueller selon l'invention, représenté sur la Figure 1, comprend une source lumineuse 2 émettant un faisceau incident 10 et un générateur d'états de polarisation ou PSG 3, qui transforme de façon contrôlée l'état de polarisation du faisceau incident 10. Le PSG 3 polarise linéairement le faisceau incident 10 et lui applique une modulation de polarisation. Il transmet le faisceau incident modulé 11 vers un échantillon 1 à mesurer. L'ellipsomètre comprend aussi un détecteur d'états de polarisation ou PSD 4, qui détecte un faisceau de mesure 12 renvoyé par l'échantillon 1 et une unité de traitement 5 recevant des signaux électriques produits par le PSD 4. L'échantillon 1 ayant une matrice de Mueller M, l'unité de traitement 5 détermine complètement cette matrice M au cours d'une mesure, d'une manière automatique.

Dans un premier mode de réalisation de l'ellipsomètre de Mueller selon l'invention, schématisé sur la Figure 2, le PSG 3A comprend un polariseur linéaire 20 et un modulateur couplé 6A comportant deux modulateurs de phase 21 et 22 et un système de couplage 23 du type polariseur partiel et déphaseur. Les deux modulateurs de phase 21 et 22 ont une même orientation et le système de couplage 23 est interposé entre eux et transmet le faisceau incident 10 du premier modulateur de phase 21 vers le second modulateur de phase 22.

Préférentiellement, les orientations des différents éléments sont les suivants. Le faisceau incident 10 ayant une direction et un sens de propagation et un plan incident étant défini à partir de cette direction de propagation et de l'échantillon 1, on forme un repère comportant un premier axe x perpendiculaire à la direction de propagation et dans le plan d'incidence, un deuxième axe y perpendiculaire au plan d'incidence et un troisième axe parallèle à la direction de propagation et orienté dans le même sens, ce repère étant direct. Le polariseur 20 est alors un polariseur parfait orienté selon l'axe y. Les deux modulateurs de phase 21 et 22 sont identiques et orientés dans le plan x-y selon des directions formant respectivement avec l'axe y des angles $\alpha_1$ et $\alpha_2$. Les angles $\alpha_1$ et $\alpha_2$ sont avantageusement identiques et préférentiellement égaux à $\pi/4$. Le système de couplage 23 est orienté selon l'axe x.

En fonctionnement le faisceau incident 10 est polarisé linéairement par le polariseur 20, puis subit une double modulation couplée du fait des modulateurs de phase 21, 22 et du système de couplage 23. Le système de couplage 23 assure deux fonctions: une polarisation partielle (polariseur imparfait) qui module l'intensité moyenne I et un déphasage qui mêle les composants U et V du vecteur de Stokes S.

Selon une réalisation particulière de ce PSG 3A, représentée sur la Figure 3, le polariseur 20 est un polariseur commercialisé sous le nom de « Polariseur de Glan Thomson » et les modulateurs de phase 21, 22 sont des modulateurs électro-optiques du type cellules de Pockels. L'utilisation de modulateurs électro-optiques rend possible une commande de phase absolue qui permet de synchroniser les modulateurs de phase 21 et 22. Le modulateur double 6A comprend aussi des cellules commercialisées sous le nom de cellules de Peltier, régulant thermiquement les cellules de Pockels.

Le système de couplage 23 comporte avantageusement deux lames transparentes 24 et 25 recouvertes d'une couche très mince d'or, orientées pour éviter de générer un décalage de faisceau. Il reçoit le faisceau 10 avec un angle d'incidence préférentiellement égal à 60°, lié à $\alpha_0$ (angle entre la direction de propagation et l'orientation de la première lame 24).

Le système de couplage 23 en transmission peut être remplacé par un système de couplage en réflexion, par exemple sous la forme d'un miroir en chrome.

Le PSG 3A comprend aussi un séparateur 27 de faisceaux, disposé sur le trajet du faisceau incident modulé 11 après les modulateurs 21, 22. Ce séparateur 27 prélève un faisceau de commande 15, utilisé pour agir sur les modulations afin de compenser des fluctuations parasites. De préférence, le séparateur 27 prélève 4 % de l'intensité lumineuse dans le faisceau de commande 15. Il peut s'agir d'une lame de verre inclinée à 45° de la direction de propagation.

Avantageusement, la source lumineuse 2 émet des faisceaux laser 13, 14 à plusieurs longueurs d'onde. L'ellipsomètre comprend alors un miroir 26 mobile permettant de sélectionner la longueur d'onde désirée.

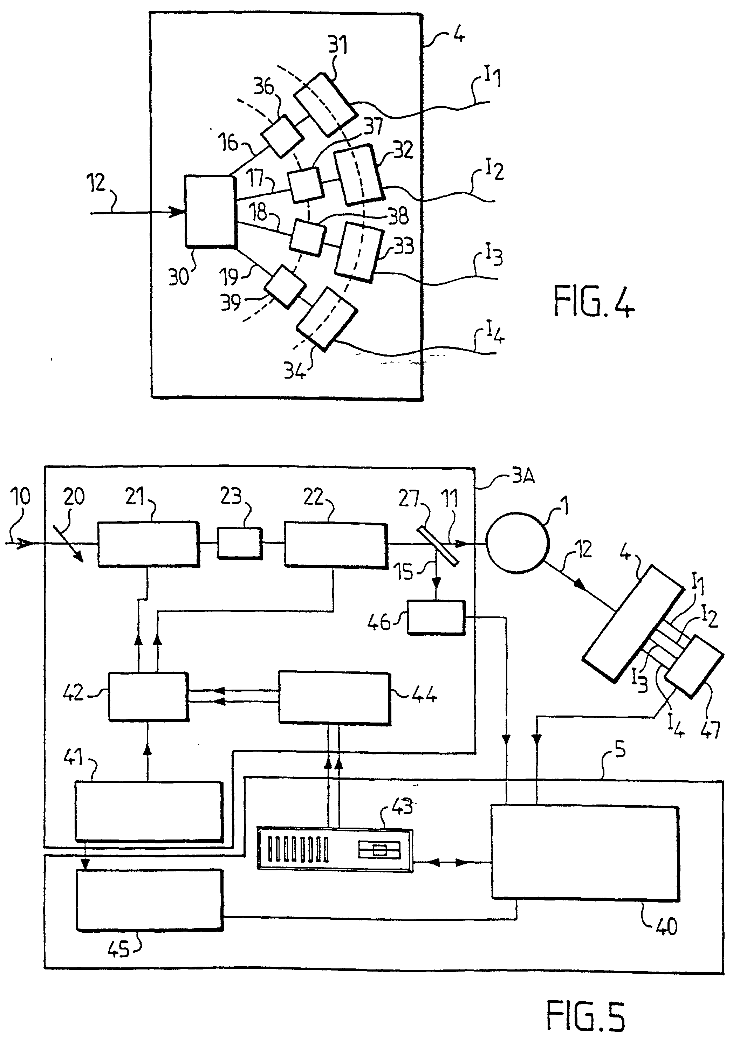

Le PSD 4, comme représenté à la Figure 4, comprend avantageusement un séparateur 30 de faisceaux séparant le faisceau de mesure 12 en au moins quatre faisceaux secondaires 16-19. Le PSD 4 comprend également des analyseurs de polarisation 36-39 donnant à chacun de ces faisceaux secondaires 16-19 un état de polarisation distinct et des photodétecteurs 31-34 détectant respectivement les intensités $I_1$ à $I_4$ des faisceaux secondaires 16-19. A titre d'exemple, les faisceaux secondaires 16-19 étant au nombre de quatre, les analyseurs de polarisation 36-39 associés sont respectivement rien, un polariseur linéaire à 90°, un polariseur linéaire à -45° et l'association d'une lame quart d'onde à 45° et d'un polariseur à 90°.

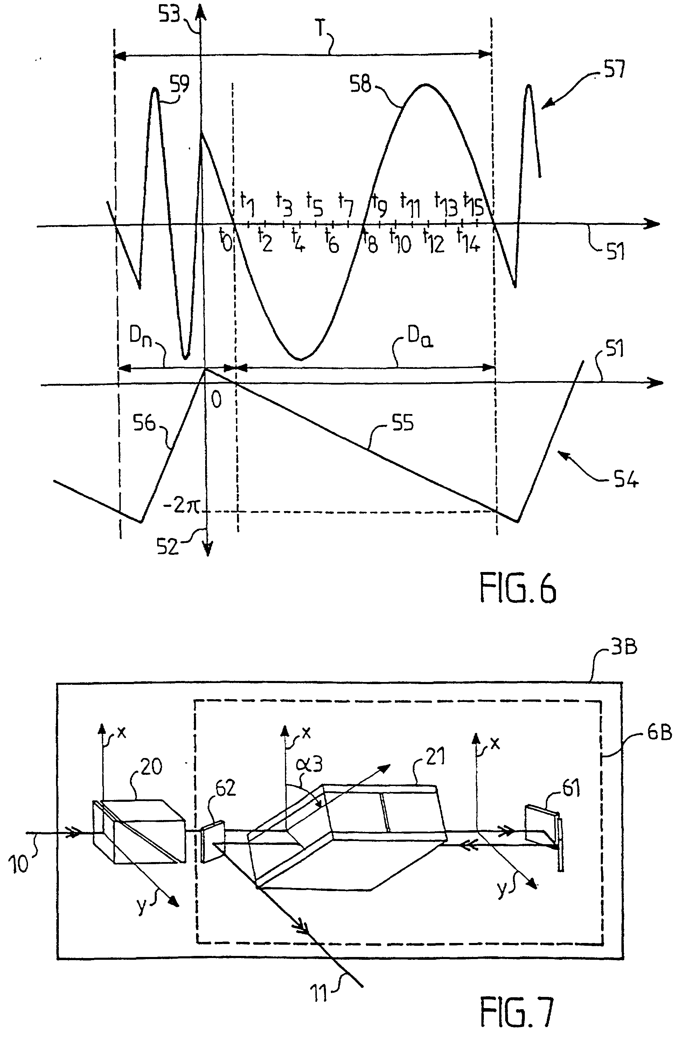

Le montage de commande et de traitement du signal va maintenant être détaillé, en référence à la Figure 5.

Le PSG 3A comprend un générateur de signal 41 relié aux modulateurs 21 et 22 par l'intermédiaire d'un amplificateur 42. Ce générateur de signal 41 applique par l'intermédiaire de l'amplificateur 42 une tension aux modulateurs 21, 22. Cette tension se traduit sur le faisceau 10 par un déphasage $\delta$ de la polarisation, proportionnel à cette tension au cours du temps t. Préférentiellement, ce déphasage $\delta$ est constitué de rampes de période $2\pi/\omega$ et de pente $\omega$ sur chaque période. De la sorte, toute fonction périodique de $\delta(t)$ de période $2\pi$ est la même fonction périodique de $\omega t$.

L'unité de traitement 5 comprend un processeur de signaux de données 40 ou DSP (Data Signal Processor), qui reçoit des signaux électriques en provenance du PSD 4. Le PSD 4 peut être relié au DSP 40 par un multiplexeur 47, ou par tout autre moyen connu. Le DSP 40 calcule les coordonnées harmoniques désirées des intensités des faisceaux secondaires 16-19 mesurées. Avantageusement, les harmoniques de calcul sont les quatre d'ordres 1 et 2 :

$$\cos \omega t, \ \sin \omega t, \ \cos 2\omega t, \ \sin 2\omega t.$$

Il n'est pas nécessaire de garder la composante continue, car l'intensité moyenne I du faisceau incident 10 est modulée par le PSG 3A.

Dans une variante de réalisation, le DSP 40 calcule les coordonnées harmoniques dans une base comportant plus de quatre harmoniques, regroupant par exemple les précédents et des harmoniques d'ordres supérieurs à 2.

Le DSP 40 est équipé d'un convertisseur analogique numérique ou ADC (Analogic Digital Converter) qui lui fournit des valeurs des signaux électriques provenant du PSD 4 en des points d'échantillonnage, ainsi que d'une mémoire du type FIFO, qui moyenne ces valeurs durant plusieurs périodes avant qu'elles soient traitées par le DSP 40. L'échantillonnage comprend par exemple seize points par période.

L'unité de traitement 5 comprend également un ordinateur 43, qui reçoit les coordonnées harmoniques calculées par le DSP 40.

D'une manière préférée, comme illustré à la Figure 5, l'unité de traitement 5 comprend un générateur d'échantillonnage 45 asservi en phase au générateur de signal 41. Le générateur d'échantillonnage 45 fournit des instants d'échantillonnage au DSP 40. Le traitement du signal par le DSP 40 à partir de ces instants est avantageusement mis en oeuvre par une transformée de Fourier rapide spéciale, ou SFTT (Special Fast Fourier Transform) dont on décrit ci-après le principe dans un premier mode de mise en oeuvre, la SFFT1. L'intervalle $[0,2\pi/\omega]$ étant discrétisé en 2N points $T_k$ équi-répartis, le générateur d'échantillonnage 45 détermine pour chaque période de modulation les instants d'échantillonnage $t_k$ donnés par :

$$\delta (t_k) = \omega \, T_k,$$

pour k variant de 0 à 2N-1. Un signal électrique fourni par le PSD 4 étant représenté par une fonction f du temps t, le DSP 40 évalue la j-ème composante harmonique $b_j$ de la fonction f par :

$$b_j = \frac{1}{2N} \sum_{k=0}^{2N-1} f(t_k) \exp(-ij\omega T_k)$$

avec $i^2 = -1$.

Le cas usuel de la FFT correspond à $t_k = T_k$, quel que soit k.

L'avantage de la SFFT est qu'elle permet de corriger numériquement des écarts du déphasage $\delta$ réellement appliqué par les modulateurs de phase 21 et 22 par rapport à un déphasage idéal qui consisterait en des rampes parfaites. Ces écarts peuvent être par exemple dus à un temps de montée de l'amplificateur 42, entraînant des erreurs de l'ordre de 10 % à 50 kHz sur la forme théorique de la matrice de modulation W, mais n'ont pas d'incidence sur la précision de mesure de M. Comme cet écart s'accroît avec la fréquence, à plus hautes fréquences, la SFFT permet de conserver des performances constantes.

Ainsi, comme on peut le voir sur la Figure 6, la courbe 54 donnant le déphasage $\delta$ (axe 52) en fonction du temps t (axe 51) admet sur chaque période de modulation T une partie linéaire 55 correspondant à la rampe désirée et une partie 56 parasite due au temps de montée. Le générateur d'échantillonnage 45 procède de telle sorte que les instants d'échantillonnage $t_0$, $t_1$....$t_{15}$ sont équi-répartis sur une durée d'acquisition $D_a$ associés à la partie linéaire 55. Aucune acquisition n'a lieu en revanche pendant une durée de non-acquisition $D_n$ correspondant à la partie parasite 56. Une variation sinusoïdale du déphasage $\delta$ (axe 53) en fonction du temps (axe 51) a donc une courbe 57 qui admet sur chaque période T une partie régulière 58 pendant la durée $D_a$ et une partie parasite 59 pendant la durée $D_n$. La partie régulière 58 est celle qui serait obtenue avec un déphasage $\omega t$ (au signe près). La forme de modulation produisant la courbe 54 n'est usuellement réalisable qu'avec des modulateurs de phase de type électro-optique.

Ce traitement du signal est particulièrement efficace et précis. Cependant, dans une variante, le générateur d'échantillonnage 45 est absent de l'unité de traitement 5 et le DSP 40 est équipé d'une boucle à phase asservie ou PLL (Phase Locked Loop). Dans ce cas, la PLL génère des instants d'échantillonnage $T_k$ équi-répartis sur chaque période et le DSP 40 effectue une transformée de Fourier rapide usuelle.

Dans un second mode de mise en oeuvre de la SFFT, noté SFFT2, le générateur d'échantillonnage 45 est absent de l'unité de traitement 5 et le DSP 40 est muni d'une PLL qui génère 2N instants d'échantillonnage $T_k$ équi-répartis sur chaque période. Cependant, au lieu que le DSP 40 effectue une transformée de Fourier rapide usuelle comme dans la réalisation précédente, il procède de la manière suivante. L'ordinateur 43 stocke au préalable en mémoire m fonctions $g_j(t)$ prédéterminées, dites de démodulation. Les fonctions $g_j$ forment la base duale de m coordonnées harmoniques $H_\ell(t)$ de calcul regroupées dans un vecteur harmonique H(t). Les modulateurs 21 et 22 étant électro-optiques, H(t) vaut (avec m = 4) :

$$H(t) = \begin{pmatrix} \cos\omega t \\ \sin\omega t \\ \cos(2\omega t) \\ \sin(2\omega t) \end{pmatrix}$$

et les modulateurs 21 et 22 étant photoélastiques, il vaut ($A_0$ étant une constante) :

$$H(t) = \begin{pmatrix} \cos(A_0 \sin\omega t) \\ \sin(A_0 \sin\omega t) \\ \cos(2A_0 \sin\omega t) \\ \sin(2A_0 \sin\omega t) \end{pmatrix}$$

On a ainsi, avec l'échantillonnage des $T_k$ :

$$\frac{1}{2N} \sum_{k=0}^{2N-1} H_\ell(T_k) g_j(T_k) = \begin{cases} 1 \text{ si } j = \ell \\ 0 \text{ si } j \neq \ell \end{cases}$$

Le DSP 40 évalue alors la j-ème composante harmonique $b_j$ d'une fonction f (représentative d'un signal électrique fourni par le PSD 4) par

$$b_j = \frac{1}{2N} \sum_{k=0}^{2N-1} f(T_k) g_j(T_k)$$

Le PSG 3A est équipé d'un système de stabilisation temporelle de modulation de phase. Ce système (Figure 5) comprend le séparateur 27 de faisceaux, qui envoie le faisceau de commande 15 vers le DSP 40 par l'intermédiaire d'un photomultiplicateur 46. Le système de stabilisation comprend également un convertisseur numérique-analogique 44 ou DAC (Digital Analogic Converter), qui reçoit des signaux de commande de l'ordinateur 43 et fournit à l'amplificateur 42 des tensions de contrôle (bas voltages) $U_1$ et $U_2$ respectivement destinées aux modulateurs 21 et 22.

En fonctionnement, le DSP 40 calcule les coordonnées harmoniques associées au faisceau de commande 15, représentatif du faisceau incident modulé 11, dans la base harmonique fixée. Il fournit ces coordonnées harmoniques à l'ordinateur 43, qui détermine, à partir de valeurs de consigne, les tensions $U_1$ et $U_2$ à appliquer pour compenser des déphasages parasites, dus notamment à des variations de température. L'ordinateur 43 fournit ensuite ces tensions $U_1$, $U_2$ à l'amplificateur 42 par l'intermédiaire du DAC 44. Chacune de ces tensions de contrôle $U_1$ et $U_2$ s'ajoute alors à la tension U fournie par le générateur de fonction 41, avant amplification par l'amplificateur 42.

Dans un deuxième mode de réalisation de l'ellipsomètre selon l'invention, représenté sur la Figure 7, le PSG 3B comporte un unique modulateur de phase. Dans ce deuxième mode de réalisation, les éléments identiques à ceux du premier mode de réalisation sont désignés par les mêmes références. Le PSG 3B comprend un polariseur 20 polarisant linéairement le faisceau incident 10 et un modulateur couplé 6B comportant un unique modulateur de phase 21 et un système de couplage 61 du type polariseur partiel et déphaseur, fonctionnant en réflexion. Le modulateur de phase 21 est interposé entre le polariseur 20 et le système de couplage 61, de telle sorte qu'il produit une première modulation du faisceau incident 10 polarisé et l'envoie vers le système de couplage 61, ce dernier renvoyant le faisceau incident 10 vers le modulateur de phase 21 qui produit une seconde modulation. Le modulateur couplé 6B comprend également un miroir 62 disposé entre le polariseur 20 et le modulateur 21, qui réfléchit le faisceau 11 modulé deux fois vers l'échantillon 1.

Les axes x et y étant définis comme dans le premier mode de réalisation, selon une forme préférée, le polariseur 20 est orienté selon l'axe y et le modulateur 21 est orienté dans le plan x-y selon une direction formant un angle $\alpha_3$ avec l'axe x, $\alpha_3$ étant égal à 45°. Le système de couplage 61 est quant à lui orienté selon l'axe x, de manière à permettre un retour du faisceau incident 10 parallèlement à l'aller. Le miroir 62 renvoie avantageusement le faisceau 11 selon l'axe y.

Dans une première variante de réalisation, le modulateur 21 est un modulateur électro-optique (cellule de Pockels). Un tel modulateur 21 permet une commande externe de déphasage et d'avoir une bande passante dépassant 100 MHz. Cette bande passante ne dépend que du générateur de signal 41 et de l'amplificateur 42.

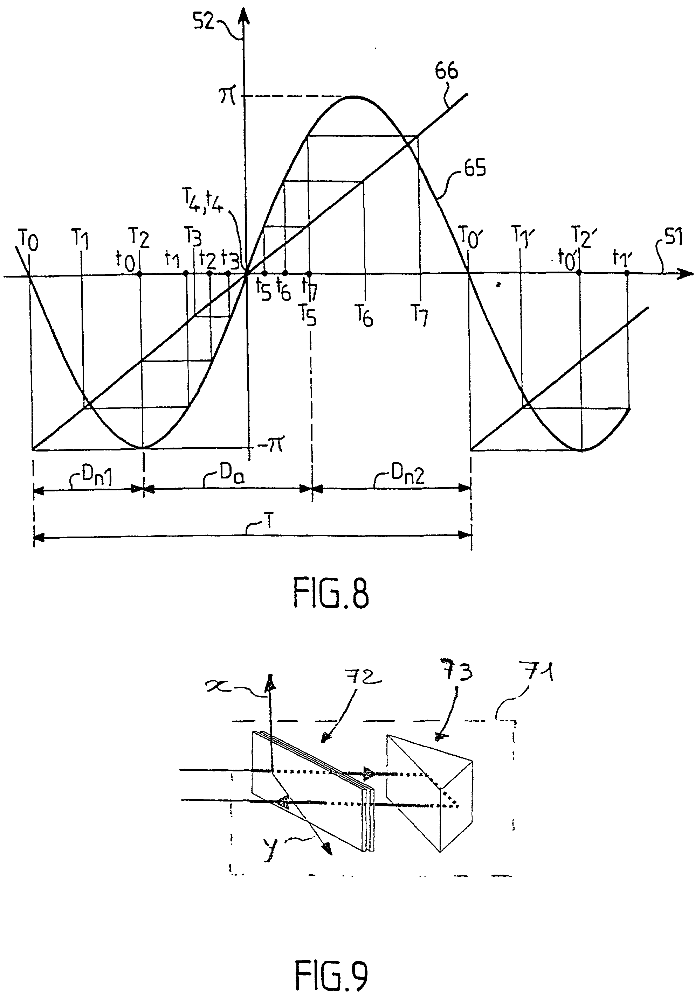

Dans une seconde variante, le modulateur de phase 21 est un modulateur photoélastique. On obtient ainsi une gamme de longueur d'onde étendue et une grande fenêtre optique. La forme du déphasage $\delta(t)$ est alors fixée et elle est proportionnelle à sin $\omega t$ (Figure 8). Dans cette seconde variante, on calcule les harmoniques voulus au moyen de la SFFT précédemment décrite, par exemple par un générateur d'échantillonnage et un DSP semblable à ceux du premier mode de réalisation référencés respectivement 45 et 40 et la SFFT1 (Figure 5). La matrice de modulation W du PSG 3B est ainsi de rang 4, alors qu'une FFT usuelle rendrait cette matrice singulière. Le modulateur 21 a une amplitude de modulation supérieure ou égale à $\pi$, de façon à rendre la SFFT1 applicable.

A titre d'exemple, le modulateur de phase 21 applique un déphasage temporel $\delta$ de la forme :

$$\delta(t) = \pi \sin \omega t,$$

comme représenté sur la Figure 8. En adoptant un échantillonnage de huit points par période T, égale à 2 $\pi/\omega$, on obtient les huit points $T_0$-$T_7$ équi-répartis sur la période T (et d'une manière similaire sur la période suivante : $T'_0$-$T'_7$). Les huit instants d'échantillonnage $t_0$-$t_7$ (et sur la période suivante $t'_0$, $t'_1$, etc.) sont obtenus par la formule de la SFFT1, et répartis sur une durée d'acquisition $D_a$. La durée complémentaire sur la période T est composée de deux durées $D_{n1}$ et $D_{n2}$ de non-acquisition. Les images des instants d'échantillonnage $t_k$ sont alors obtenues à partir de la courbe 65 donnant le déphasage $\delta$ en fonction du temps t et de la courbe 66, de la forme $\omega t$. Les images des instants $t_k$ sur la courbe 65 correspondent aux images des points $T_k$ sur la courbe 66.

Le choix de la base d'harmoniques dans ce deuxième mode de réalisation est avantageusement le même que celui indiqué pour le premier mode de réalisation.

La SFFT2 fournit une autre mise en oeuvre avantageuse.

Dans une autre forme de réalisation du système de couplage en réflexion, référencée 71 et représentée sur la Figure 9, le PPS comporte deux éléments distincts 72 et 73 réalisant respectivement les fonctions de polarisation partielle d'une part, et de déphasage et de réflexion d'autre part.

L'élément 72 de polarisation partielle est avantageusement constitué par un empilement de lames air-matière, par exemple formées par des plaques de verre successives d'indice N1. Préférentiellement, il est orienté selon l'angle de Brewster. Celui-ci assure en effet le meilleur compromis entre la polarisation partielle et la perte totale d'intensité, sans déphasage. Le type de matériaux employés et le nombre de lames sont choisis en fonction de la gamme spectrale à couvrir.

L'élément 73 de déphasage et de réflexion est un prisme. Un faisceau incident sur cet élément 73 est ainsi réfléchi avec un déphasage qui dépend de l'indice N2 du prisme, sans subir de polarisation partielle, ni perdre d'intensité, Préférentiellement, l'élément 73 est un prisme droit, de telle sorte que le faisceau incident est réfléchi parallèlement.

Des valeurs optimales des indices N1 et N2 sont données par les formules suivantes, dans lesquelles $n_i$ désigne le nombre de passages à travers les lames air-verre de l'élément 72 (comptés dans chaque sens), à l'incidence de Brewster :

$$N1 = (tg65,90°)^{1/(2n_i)} + \sqrt{tg(65.90°)^{1/n_i} - 1}$$

$$N2 = 1.703$$

On obtient ainsi un conditionnement optimal de la matrice de modulation W.

A titre d'exemple, l'élément 73 est un prisme de verre du type commercialisé sous le nom C4834, qui a des indices de 1,68 à 404 nm et 1,64 à 706 nm.

En ce qui concerne l'élément 72, le nombre de passages n est choisi selon la gamme d'application en longueur d'onde, et donne l'indice N1.

Dans un premier exemple ayant des applications en infrarouge, l'élément 72 comporte une unique lame de verre qui est traversée seulement une fois, soit à l'aller, soit au retour ($n_i = 1$). La valeur optimale de N1 est alors 2,6, ce qui peut être approché par exemple avec du ZnS.

Dans un deuxième exemple, l'élément 72 comporte une plaque de verre traversée à l'aller et au retour ($n_i = 2$) et N1 = 1,927.

Dans un troisième exemple ayant des applications dans le domaine visible, l'élément 72 comprend deux plaques de verre ($n_i = 4$) et N1 = 1,578. Les plaques sont alors constituées par exemple par le matériau commercialisé sous le nom BK7.

Dans un quatrième exemple ayant des applications dans l'ultraviolet et le visible, l'élément 72 comprend trois plaques de verre ($n_i = 6$) et N = 1,448. Les plaques sont alors par exemple en silice fondue.

Dans les modes de réalisation présentés jusqu'à présent, le PSD 4 repose sur un séparateur d'états de polarisation (Figure 4) comprenant des éléments fixes sans modulation. Une variante consiste à utiliser les réflexions consécutives du faisceau de mesure 12 sur au moins quatre photodétecteurs. On trouvera une description d'un tel PSD dans « Arrangement of four photodetectors for measuring the state of polarization of light », R.M. Azzam, Optics Letters, Vol. 10, pp. 309-311, 1985. Ces techniques multivoies ont pour point commun de mesurer les états de polarisation sans nouvelle modulation ni partie mobile

Dans un autre mode de réalisation, le PSD 4 comprend un modulateur de polarisation à une fréquence différente de celle du PSG 3. L'ellipsomètre utilise alors une technique monovoie, la base d'harmoniques choisie comprenant au moins seize composantes. Il est également possible d'utiliser pour le PSD une technique monovoie ou multivoie impliquant des éléments mobiles.

Dans le cas monovoie (n = 1), l'un des PSG 3A, 3B décrits précédemment peut être utilisé comme PSD dans le bras de sortie, associé à l'un quelconque des PSG dans le bras d'entrée. Le PSD correspond dans ce cas aux Figures 2 et 7 à l'exception que le polariseur 20 est situé dans le faisceau émergent 11 au lieu du faisceau incident 10. L'orientation des éléments optiques est avantageusement la même dans le PSD et le PSG. La fréquence de modulation du PSD correspond à 5 fois ou 1/5 fois celle ($\omega/2\pi$) du PSG. L'unité de traitement fournit par transformée de Fourier 16 valeurs indépendantes (m = 16).

Plus généralement, l'un quelconque des PSG 3A, 3B peut être utilisé indépendamment comme détecteur d'états de polarisation (mesure du vecteur de Stokes) dans tout montage optique.

On s'intéressera maintenant au calibrage de l'ellipsomètre. On distingue deux niveaux de calibrage.

Le premier niveau concerne l'orientation des éléments optiques, la détermination de !'amplitude de modulation, et l'opération d'asservissement. De préférence, on opère de la façon suivante: on définit une référence d'angle absolu par l'orientation du polariseur 20 du PSG 3. Pour se faire, on fait en sorte qu'une lumière polarisée linéairement dans le plan d'incidence soit réfléchie sans polarisation croisée. Ainsi, on utilise un polariseur dans le faisceau incident et un, tourné à $\pi/2$ du premier, dans le faisceau réfléchi, et on les tourne ensemble jusqu'à ce que le faisceau soit complètement éteint. On aligne ensuite les autres éléments optiques par rapport à ce polariseur 20.

Pour orienter les modulateurs de phase 21, 22, on annule la modulation, ce qui correspond à l'alignement du polariseur 20 d'entrée et de l'axe propre (fast axis) des modulateurs.

On obtient la bonne amplitude de modulation, c'est-à-dire les pentes correctes des rampes $\delta(t) = \omega t$, en minimisant les harmoniques supérieures par rapport à l'harmonique d'ordre 1 avec un seul modulateur. On détermine expérimentalement les paramètres nécessaires pour l'asservissement.

Le second niveau de calibrage, qui est le plus important, est la détermination des matrices de modulation W et de détection A. On emploie préférentiellement un procédé d'auto-calibrage décrit ci-après. On choisit tout d'abord un ensemble d'entités de calibrage ayant des matrices de Mueller connues. L'une de ces matrices de Mueller est la matrice identité $I_0$ (rien en transmission). On adopte ensuite successivement chacune des autres entités de calibrage comme échantillon 1 et on procède à des mesures ellipsométriques. On obtient ainsi pour chaque entité de matrice de Mueller M, la matrice AMW à partir de ces mesures. On mesure également la matrice $AI_0W$. On établit ensuite un système d'équations linéaires, qu'on résout de manière à extraire les matrices de modulation W et de détection A.

De préférence, on choisit un nombre d'entités suffisant pour surdéterminer les matrices W et A. A titre d'exemple, le PSD 4 comprenant un séparateur d'états de polarisation n'introduisant pas de nouvelle modulation temporelle, on utilise successivement quatre entités. Une de ces quatre entités est le vide, la mesure étant effectuée en transmission sans échantillon. L'ensemble des trois autres entités comprend en transmission un polariseur linéaire à 0° et un polariseur linéaire à 45°, et en réflexion ou transmission un polariseur partiel et déphaseur sans valeur singulière. Ce dernier peut être une lame quart d'onde. Préférentiellement, on mesure alors précisément sa matrice de Mueller par ellipsométrie standard.

On extrait les matrices W et A du système linéaire surdéterminé au moyen d'un algorithme de moindres carrés.

La méthode d'auto-calibrage donne des résultats très précis, du fait qu'elle est liée à l'auto-cohérence du formalisme de Mueller. Elle est également facile et rapide à mettre en oeuvre.

L'ellipsomètre de Mueller selon l'invention est approprié à des mesures tant monochromatiques que spectroscopiques.

**Revendications**

1.   Composant optique de modulation de polarisation comprenant un modulateur de polarisation (6A, 6B) qui module un faisceau incident (10) de lumière polarisée linéairement et renvoie un faisceau modulé (11), le modulateur de polarisation (6A, 6B) étant un modulateur de phase couplé modulant le faisceau incident (10) deux fois successivement, les deux modulations étant strictement à la même fréquence $\omega/2\pi$ et étant couplées, **caractérisé en ce que** les modulations sont couplées par un système (23, 61, 71) modifiant l'état de polarisation de la lumière entre les deux modulations.

2.   Composant optique selon la revendication 1, **caractérisé en ce que** le modulateur couplé (6B) comprend un modulateur de phase (21) produisant les deux modulations successives et **en ce que** le système de couplage (61, 71) est du type polariseur partiel et déphaseur, le modulateur de phase (21) produisant la première modulation et envoyant le faisceau incident (10) vers le système de couplage (61, 71), le système de couplage (61, 71) renvoyant le faisceau incident (10) vers le modulateur de phase (21) et le modulateur de phase (21) produisant la seconde modulation.

3.   Composant optique selon la revendication 2, **caractérisé en ce que** la lumière du faisceau incident (10) étant polarisée linéairement selon une direction de polarisation (y), le modulateur de phase (21) et le système de couplage (61) sont orientés respectivement à 45° et 90° de la direction de polarisation (y).

4.   Composant optique selon la revendication 1, **caractérisé en ce que** le modulateur couplé (6A) comprend deux modulateurs de phase (21, 22) produisant respectivement les deux mêmes modulations successives, les deux modulateurs de phase (21, 22) ayant une même orientation et **en ce que** le système de couplage (23) est du type polariseur partiel et déphaseur, ledit système de couplage (23) étant interposé entre les deux modulateurs de phase (21, 22) et envoyant le faisceau incident (10) du premier (21) vers le second (22) desdits modulateurs de phase.

5.   Composant optique selon la revendication 4, **caractérisé en ce que** la lumière du faisceau incident (10) étant polarisée linéairement selon une direction de polarisation (y), les modulateurs de phase (21, 22), d'une part, et le système de couplage (23) d'autre part, sont orientés respectivement à 45° et 90° de la direction de polarisation (y).

6.   Composant optique selon l'une quelconque des revendications 1 à 5, **caractérisé en ce que** le système de couplage (71) fonctionne en réflexion et comporte un premier élément (72) de polarisation partielle et un second élément (73) de déphasage et de réflexion.

7.   Composant optique selon la revendication 6, **caractérisé en ce que** le premier élément (72) est constitué par un empilement d'interfaces air-matière à l'angle de Brewster et le second élément (73) est constitué par un prisme.

8.   Polarimètre, **caractérisé en ce qu'**il comprend un composant optique selon l'une quelconque des revendications 1 à 7.

9.   Ellipsomètre de Mueller destiné à la mesure d'un échantillon (1) représenté par des coefficients d'une matrice de Mueller (M) comprenant :

-    une source lumineuse (2) émettant un faisceau lumineux incident (10),
-    un polariseur (20) polarisant linéairement ledit faisceau incident (10),
-    un modulateur de polarisation (6A, 6B) modulant ledit faisceau incident (10), ledit échantillon (1) recevant le faisceau incident modulé (11) et renvoyant un faisceau de mesure (12),
-    des moyens de détection (4) du faisceau de mesure (12) produisant des signaux électriques, et
-    une unité de traitement (5) recevant les signaux électriques produits par les moyens de détection (4),

**caractérisé en ce que** le modulateur de polarisation (6A, 6B) est inclus dans un composant optique selon l'une quelconque des revendications 1 à 5, **en ce que** les moyens de détection (4) comportent un polarimètre comportant des moyens permettant de produire n quantités mesurées ($I_1$ -$I_n$) représentant les états de polarisation du faisceau de mesure (12) et **en ce que** l'unité de traitement (5) comporte des moyens permettant de produire par transformée de Fourier m valeurs pour chacune des n quantités mesurées ($I_1$ - $I_n$), avec n x m $\geq$ 16 et m $\geq$ 4, permettant ainsi d'accéder simultanément aux seize coefficients de la matrice de Mueller (M).

10. Ellipsomètre selon la revendication 9, **caractérisé en ce que** les moyens du polarimètre permettent de produire n $\geq$ 4 quantités mesurées et **en ce que** le polarimètre a une structure telle qu'il n'introduit pas de nouvelle modulation temporelle.

11. Ellipsomètre selon la revendication 10, **caractérisé en ce que** les moyens du polarimètre et de l'unité de traitement permettent de produire n = 4 quantités mesurées et m = 4 valeurs et **en ce que** le polarimètre a une structure permettant de séparer les quatre états de polarisation du faisceau de mesure (12) associés auxdites quatre quantités mesurées ($I_1$-$I_n$).

12. Ellipsomètre selon la revendication 11, **caractérisé en ce que** ledit composant optique étant défini par l'une quelconque des revendications 1 à 5, l'unité de traitement comporte des moyens permettant de produire quatre valeurs produites par transformée de Fourier pour chaque quantité mesurée ($I_1$ - $I_n$) dépendant du temps t, les quatre valeurs étant les coordonnées harmoniques de ladite quantité mesurée ($I_1$-$I_n$) dans la base .
$$\cos \omega t,\ \sin \omega t,\ \cos 2\,\omega t,\ \sin 2\,\omega t.$$

13. Ellipsomètre selon l'une quelconque des revendications 9 à 12, **caractérisé en ce que** l'unité de traitement comporte des moyens permettant de produire les m valeurs pour chacune des n quantités mesurées $I_h(t)$ au moyen d'une transformée de Fourier spéciale selon laquelle, m coordonnées harmoniques $H_\ell$ (t) de calcul dépendant du temps t étant regroupées dans un vecteur harmonique H(t), l'intervalle $[0,2\pi/\omega]$ étant discrétisé en 2N points $T_K$ équi-répartis et la quantité mesurée $I_h(t)$ étant calculée à des instants d'échantillonnage $t_K$, pour k variant de 0 à 2N-1, lesdits moyens de l'unité de traitement permettent d'évaluer la j-ème composante harmonique $B_{hj}$ de la fonction $I_h$, pour j variant de 1 à m et h variant de 1 à n, par :

$$B_{hj} = \frac{1}{2N} \sum_{k=0}^{2N-1} I_h(t_k) g_j(T_k)$$

les fonctions $g_j(t)$ étant des fonctions de démodulation choisies telles que la matrice D de démodulation donnée par

$$D_{\ell j} = \frac{1}{2N} \sum_{k=0}^{2N-1} H_\ell(t_k) g_j(T_k)$$

pour $\ell$ et j variant de 1 à m, est de rang supérieur ou égal à 4.

14. Ellipsomètre selon la revendication 13, **caractérisé en ce que** les moyens de l'unité de traitement permettent d'appliquer deux modulations de phase ayant un même déphasage $\delta$(t), avec

$$\delta(t_k) = \omega T_k, \text{ et}$$

$$g_j(T_k) = \exp(-ij\omega)T_k) \text{ et } i^2 = -1.$$

15. Ellipsomètre selon la revendication 13, **caractérisé en ce que** les moyens de l'unité de traitement sont structurés de telle manière que $t_k$ = Tk, et $g_j$ tels que D soit la matrice identité.

16. Ellipsomètre selon l'une quelconque des revendications 9 à 15, **caractérisé en ce que** les moyens de détection (4) et l'unité de traitement (5) sont adaptés à des mesures spectroscopiques.

17. Procédé de calibrage d'un l'ellipsomètre **caractérisé en ce que**, l'ellipsomètre étant défini par l'une quelconque des revendications 9 à 16, le polariseur (20) et le modulateur de polarisation (6A, 6B) constituant un générateur d'états de polarisation (3), ledit générateurs d'états de polarisation (3) et lesdits moyens de détection (4) ayant respectivement une matrice de modulation (W) et une matrice de détection (A):

   - on choisit un ensemble d'entités de calibrage ayant des matrices de Mueller (M) connues, l'une desdites entités correspondant à la matrice identité ($I_o$),
   - pour chacune des entités de calibrage, on adopte ladite entité comme échantillon (1) dans l'ellipsomètre, on émet un faisceau lumineux incident (10) polarisé linéairement avec la source lumineuse (2) et le polariseur (20), on module le faisceau incident (10) par le modulateur couplé (6A, 6B), on envoie le faisceau incident modulé (11) sur ladite entité (1) et on renvoie un faisceau de mesure (12), on produit lesdites quantités mesurées ($I_l$ - $I_n$) par les moyens de détection (4) et lesdites valeurs par l'unité de traitement (5), et on construit à partir desdites valeurs une matrice mesurée (AMW), produit des matrices de détection (A), de Mueller (M) de ladite entité et de modulation (W),

- on établit un système d'équations linéaires à partir des matrices produits mesurées (AMW), et

- on résout ledit système de façon à extraire les matrices de modulation (W) et de détection (A).

18. Procédé de calibrage selon la revendication 17, **caractérisé en ce qu'**on choisit un ensemble d'entités comprenant:

- un polariseur linéaire à 0° en transmission,
- un polariseur linéaire à 45° en transmission, et
- un polariseur partiel et déphaseur sans valeurs singulières.

19. Procédé de mesure ellipsométrique destiné à la mesure d'un échantillon (1) représenté par des coefficients d'une matrice de Mueller (M), dans lequel:

- on émet un faisceau lumineux incident (10) polarisé linéairement,
- on module le faisceau incident (10) par un modulateur de polarisation (6A, 6B),
- on envoie sur l'échantillon (1) le faisceau incident modulé (11) et on renvoie un faisceau de mesure (12),
- on détecte le faisceau de mesure (12) et on produit des signaux électriques, par des moyens de détection (4), et
- on transmet les signaux électriques à une unité de traitement (5),

**caractérisé en ce que**

- on applique deux modulations de phase successives au faisceau incident (10) au moyen du modulateur de polarisation (6A, 6B), les deux modulations étant strictement à la même fréquence $\omega/2\pi$ et étant couplées par un système (23, 61, 71) modifiant l'état de polarisation de la lumière entre les deux modulations,
- on produit n quantités mesurées ($I_l$ - $I_n$) représentant chacune un état de polarisation du faisceau de mesure (12), par les moyens de détection (4),
- on produit par transformée de Fourier m valeurs pour chacun des n quantités mesurées au moyen de l'unité de traitement (5), avec n x m $\geq$ 16 et m $\geq$ 4, permettant d'accéder aux seize coefficients de la matrice de Mueller (M).

**Patentansprüche**

1. Optisches Polarisationsmodulationsbauteil, umfassend einen Polarisationsmodulator (6A, 6B), der einen linear polarisierten eintreffenden Lichtstrahl (10) moduliert und einen modulierten Strahl (11) zurücksendet, wobei der Polarisationsmodulator (6A, 6B) ein gekoppelter Phasenmodulator ist, der den eintreffenden Strahl (10) zweimal hintereinander moduliert, wobei sich die beiden Modulationen genau auf derselben Frequenz ù/2o befinden und gekoppelt werden, **dadurch gekennzeichnet, dass** die Modulationen durch ein System (23, 61, 71) gekoppelt werden, das den Polarisationszustand des Lichtes zwischen den beiden Modulationen verändert.

2. Optisches Bauteil nach Anspruch 1, **dadurch gekennzeichnet, dass** der gekoppelte Modulator (6B) einen Phasenmodulator (21) umfasst, der die beiden aufeinanderfolgenden Modulationen erzeugt, und dass das Kopplungssystem (61, 71) vom Typ Teilpolarisator und Phasenverschieber ist, wobei der Phasenmodulator (21) die erste Modulation erzeugt und den eintreffenden Strahl (10) zu dem Kopplungssystem (61, 71) sendet, wobei das Kopplungssystem (61, 71) den eintreffenden Strahl (10) zu dem Phasenmodulator (21) zurücksendet und der Phasenmodulator (21) die zweite Modulation erzeugt.

3. Optisches Bauteil nach Anspruch 2, **dadurch gekennzeichnet, dass**, da das Licht des eintreffenden Strahls (10) linear entlang einer Polarisationsrichtung (y) polarisiert wird, der Phasenmodulator (21) und das Kopplungssystem (61) 45° bzw. 90° zu der Polarisationsrichtung (y) ausgerichtet sind.

4. Optisches Bauteil nach Anspruch 1, **dadurch gekennzeichnet, dass** der gekoppelte Modulator (6A) zwei Phasenmodulatoren (21, 22) umfasst, die jeweils die beiden selben aufeinanderfolgenden Modulationen erzeugen, wobei die beiden Phasenmodulatoren (21, 22) eine selbe Ausrichtung haben, und dass das Kopplungssystem (23) vom Typ Teilpolarisator und Phasenverschieber ist, wobei das Kopplungssystem (23) zwischen den beiden Phasenmodulatoren (21, 22) angeordnet ist und den eintreffenden Strahl (10) des ersten (21) zu dem zweiten (22) der Phasenmodulatoren zurücksendet.

**5.** Optisches Bauteil nach Anspruch 4, **dadurch gekennzeichnet, dass**, da das Licht des eintreffenden Strahls (10) linear entlang einer Polarisationsrichtung (y) polarisiert wird, die Phasenmodulatoren (21, 22) einerseits und das Kopplungssystem (23) andererseits jeweils 45° bzw. 90° zu der Polarisationsrichtung (y) ausgerichtet sind.

**6.** Optisches Bauteil nach einem der Ansprüche 1 bis 5, **dadurch gekennzeichnet, dass** das Kopplungssystem (71) mit Reflexion funktioniert und ein erstes Teilpolarisationselement (72) und ein zweites Phasenverschiebungs- und Reflexionselement (73) umfasst.

**7.** Optisches Bauteil nach Anspruch 6, **dadurch gekennzeichnet, dass** das erste Element (72) von einer Anhäufung von Luft-Stoff-Schnittstellen im Brewster-Winkel und das zweite Element (73) von einem Prisma gebildet ist.

**8.** Polarimeter, **dadurch gekennzeichnet, dass** es ein optisches Bauteil nach einem der Ansprüche 1 bis 7 umfaßt.

**9.** Müller-Ellipsometer, das zum Messen eines Musters (1) bestimmt ist, welches durch Koeffizienten einer Müller-Matrix (M) dargestellt ist, umfassend:

- eine Lichtquelle (2), die einen eintreffenden Lichtstrahl (10) entsendet,
- einen Polarisator (20), der den eintreffenden Strahl (10) linear polarisiert,
- einen Polarisationsmodulator (6A, 6B), der den eintreffenden Strahl (10) moduliert, wobei das Muster (1) den modulierten eintreffenden Strahl (11) empfängt und einen Messstrahl (12) zurücksendet,
- Mittel (4) zur Erfassung des Messstrahls (12), die elektrische Signale erzeugen, und
- eine Bearbeitungseinheit (5), die die elektrischen Signale empfängt, die von den Erfassungsmitteln (4) erzeugt werden,

**dadurch gekennzeichnet, dass** der Polarisationsmodulator (6A, 6B) in einem optischen Bauteil nach einem der Ansprüche 1 bis 5 eingeschlossen ist, dass die Erfassungsmittel (4) ein Polarimeter umfassen, das Mittel enthält, die es ermöglichen, n gemessene Mengen ($I_1 - I_n$) zu erzeugen, die die Polarisationszustände des Messstrahls (12) darstellen, und dass die Bearbeitungseinheit (5) Mittel umfasst, die es ermöglichen, durch Fourier-Transformation m Werte für jede der n gemessenen Mengen ($I_1 - I_n$) mit n x m $\geq$ 16 und m $\geq$ 4 zu erzeugen, wodurch es möglich ist, gleichzeitig auf die sechzehn Koeffizienten der Müller-Matrix (M) zuzugreifen.

**10.** Ellipsometer nach Anspruch 9, **dadurch gekennzeichnet, dass** es die Mittel des Polarimeters ermöglichen, n $\geq$ 4 gemessene Mengen zu erzeugen, und dass das Polarimeter eine derartige Struktur aufweist, dass es keine neue Zeitmodulation einführt.

**11.** Ellipsometer nach Anspruch 10, **dadurch gekennzeichnet, dass** es die Mittel des Polarimeters und der Bearbeitungseinheit ermöglichen, n = 4 gemessene Mengen und m = 4 Werte zu erzeugen, und dass das Polarimeter eine Struktur aufweist, die es ermöglicht, die vier Polarisationszustände des Messstrahls (12), die den vier gemessenen Mengen ($I_1 - I_n$) zugeordnet sind, zu trennen.

**12.** Ellipsometer nach Anspruch 11, **dadurch gekennzeichnet, dass**, da das optische Bauteil durch einen der Ansprüche 1 bis 5 definiert ist, wobei die Bearbeitungseinheit Mittel umfasst, um vier Werte zu erzeugen, die durch Fourier-Transformation für jede gemessene Menge ($I_1 - I_n$), die von der Zeit t abhängt, erzeugt wurden, wobei die vier Werte die harmonischen Koordinaten der gemessenen Menge ($I_1 - I_n$) in der Basis darstellen
cos ωt, sin ωt, cos 2 ωt, sin 2 ωt.

**13.** Ellipsometer nach einem der Ansprüche 9 bis 12, **dadurch gekennzeichnet, dass** die Bearbeitungseinheit Mittel umfasst, die es ermöglichen, die m Werte für jede der n gemessenen Mengen $I_h(t)$ mit Hilfe einer speziellen Fourier-Transformation zu erzeugen, nach der, wenn m harmonische Rechnungskoordinaten $H_l(t)$, die von der Zeit t abhängen, in einem harmonischen Vektor H(t) zusammengefasst werden, wobei das Intervall $[0,2\pi/\omega]$ in 2N gleichverteilte Punkte $T_K$ unstetig gemacht wird und die gemessene Menge $I_h(t)$ zu Bemusterungszeitpunkten $t_K$ berechnet wird, wobei K von 0 bis 2 N-1 variiert, es die Mittel der Bearbeitungseinheit ermöglichen, den j-ten harmonischen Bauteil $B_{hj}$ der Funktion $I_h$ zu bewerten, wobei j von 1 bis m und h von 1 bis n variiert, und zwar durch:

$$B_{hj} = \frac{1}{2N} \sum_{k=0}^{2N-1} I_h(t_k) g_j(T_k)$$

wobei die Funktionen $g_j(t)$ Demodulationsfunktionen sind, die derart gewählt sind, dass die Demodulationsmatrix D gegeben ist durch

$$D_{\ell j} = \frac{i}{2N} \sum_{k=0}^{2N-1} H_\ell(t_k) g_j(T_k)$$

worin l und j, die von 1 bis m variieren, einen Rang höher oder gleich 4 sind.

14. Ellipsometer nach Anspruch 13, **dadurch gekennzeichnet, dass** es die Mittel der Bearbeitungseinheit ermöglichen, zwei Phasenmodulationen anzulegen, die eine selbe Phasenverschiebung _(t) aufweisen, wobei

$$\delta(t_K) = \omega T_K, \text{ und}$$

$$g_j(T_K) = \exp(-ij\omega) T_K \text{ und } i^2 = -1.$$

15. Ellipsometer nach Anspruch 13, **dadurch gekennzeichnet, dass** die Mittel der Bearbeitungseinheit derart strukturiert sind, dass $t_K = T_K$ und dass die Funktionen $g_j$ derat sind, dass D die Identitätsmatrix ist.

16. Ellipsometer nach einem der Ansprüche 9 bis 15, **dadurch gekennzeichnet, dass** die Erfassungsmittel (4) der Bearbeitungseinheit (5) an spektroskopische Messungen angepasst sind.

17. Verfahren zur Kalibrierung eines Ellipsometers, **dadurch gekennzeichnet, dass**, für ein Ellipsometer, das durch einen der Ansprüche 9 bis 16 definiert ist, wobei der Polarisator (20) und der Polarisationsmodulator (6A, 6B) einen Erzeuger von Polarisationszuständen (3) darstellen, wobei die Erzeuger von Polarisationszuständen (3) und die Erfassungsmittel (4) jeweils eine Modulationsmatrix (W) und eine Erfassungsmatrix (A) aufweisen,

   - eine Gesamtheit von Kalibriereinheiten gewählt wird, die bekannte Müller-Matrices (M) aufweisen, wobei eine der Einheiten der Identitätsmatrix ($I_o$) entspricht,
   - für jede der Kalibriereinheiten die Einheit als ein Muster (1) in dem Ellipsometer angenommen wird, ein linear mit der Lichtquelle (2) und dem Polarisator (20) polarisierter eintreffender Lichtstrahl (10) entsandt wird, der eintreffende Strahl (10) durch den gekoppelten Modulator (6A, 6B) moduliert wird, der modulierte eintreffende Strahl (11) auf die Einheit (1) entsandt wird und ein Messstrahl (12) zurückgesandt wird, die gemessenen Mengen ($I_1$ - $I_n$) durch die Erfassungsmittel (4) und die Werte durch die Bearbeitungseinheit (5) erzeugt werden und ausgehend von diesen Werten, eine Messmatrix (AMW), die ein Produkt aus der Erfassungsmatrix (A), der Müller-Matrix (M) der Einheit und der Modulationsmatrix (W) ist, konstruiert wird,
   - ein System linearer Gleichungen auf Basis der erzeugten Messmatrices (AMW) erstellt wird, und
   - das System derart gelöst wird, dass die Modulationsmatrix (W) und die Erfassungsmatrix (A) entnommen werden.

18. Kalibrierverfahren nach Anspruch 17, **dadurch gekennzeichnet, dass** eine Gesamtheit von Einheiten gewählt wird, umfassend:

   - einen Linearpolarisator mit 0° Übertragung,
   - einen Linearpolarisator mit 45° Übertragung und
   - einen Teilpolarisator und Phasenverschieber ohne Einzelwerte.

19. Ellipsometrisches Messverfahren, das für die Messung eines Musters (1) bestimmt ist, das durch Koeffizienten einer Müller-Matrix (M) dargestellt ist, bei dem

   - ein linear polarisierter eintreffender Lichtstrahl (10) entsandt wird,
   - der eintreffende Strahl (10) durch einen Polarisationsmodulator (6A, 6B) moduliert wird,
   - der modulierte eintreffende Strahl (11) auf das Muster (1) entsandt und ein Messstrahl (12) zurückgesandt wird,
   - der Messstrahl (12) erfasst wird und elektrische Signale durch Erfassungsmittel (4) erzeugt werden, und
   - die elektrischen Signale an eine Bearbeitungseinheit (5) übertragen werden,

   **dadurch gekennzeichnet, dass**

   - am eintreffenden Strahl (10) mit Hilfe des Polarisationsmodulators (6A, 6B) zwei aufeinanderfolgende Phasenmodulationen vorgenommen werden, wobei sich die beiden Modulationen genau auf derselben Frequenz $\omega/2\delta$ befinden und durch ein System (23, 61, 71) gekoppelt sind, das den Polarisationszustand des Lichtes zwischen den beiden Modulationen verändert,
   - n gemessene Mengen ($I_1$ - $I_n$), die jeweils einen Polarisationszustand des Messstrahls (12) darstellen, durch die Erfassungsmittel (4) erzeugt werden, und
   - durch Fourier-Transformation m Werte für jede der n gemessenen Mengen mit Hilfe der Bearbeitungseinheit (5) erzeugt werden, und zwar mit n x m ≥ 16 und m ≥ 4, die es ermöglichen, auf die sechzehn Koeffizienten der Müller Matrix (M) zuzugreifen.

## Claims

1. An optical component for polarisation modulation including a polarisation modulator (6A, 6B) which modulates an incident beam (10) of linearly polarised light, and returns a modulated beam (11), the polarisation modulator (6A, 6B) being a coupled phase modulator modulating the incident beam (10) twice in succession, the two modulations being strictly at the same frequency of $\omega/2\pi$, and being coupled, **characterised so that** the modulations are coupled by a system (23, 61, 71) which modifies the polarisation state of the light between the two modulations.

2. An optical component according to claim 1, **characterised so that** the coupled modulator (6B) includes a phase modulator (21) producing two successive modulations, and so that the coupling system (61, 71) is of the partial polariser and phase shifter type, the phase modulator (21) producing the first modulation and sending the incident beam (10) to the coupling system (61,71), with the coupling system (61, 71) returning the incident beam (10) to the phase modulator (21) and the phase modulator (21) producing the second modulation.

3. An optical component according to claim 2, **characterised so that** the light of the incident beam (10) is polarised linearly in one direction of polarisation (y), and the phase modulator (21) and coupling system (61) are respectively oriented at 45° and 90° to the direction of polarisation (y).

4. An optical component according to claim 1, **characterised so that** the coupled modulator (6A) includes two phase modulators (21 & 22), respectively producing the same two successive modulations, the two phase modulators (21 & 22) having a single orientation, and so that the coupling system (23) is of the partial polariser and phase shifter type, the said coupling system (23) being interposed between the two phase modulators (21 & 22), and sending the incident beam (10) of the first (21) to the second (22) of the said phase modulators.

5. An optical component according to claim 4, **characterised so that** the light of the incident beam (10) is polarised linearly in one direction of polarisation (y), and the phase modulators (21 & 22) on the one hand, and the coupling system (23) on the other, are respectively oriented at 45° and 90° to the direction of polarisation (y).

6. An optical component according to any of claims 1 to 5, **characterised so that** the coupling system (71) functions on reflection, and includes a first partial polarisation element (72) and a second phase-shift and detection element (73).

7. An optical component according to claim 6, **characterised so that** the first element (72) is made up from a stack of air-material interfaces at the Brewster angle, and the second element (73) is composed of a prism.

8. A polarimeter, **characterised so that** it includes an optical component in accordance with any one of claims 1 to 7.

9. A Mueller ellipsometer intended for measurement of a sample (1) represented by the coefficients of a Mueller matrix (M), including:

   - a light source (2) emitting an incident light beam (10),
   - a polariser (20), linearly polarising the said incident beam (10),
   - a polarisation modulator (6A, 6B) modulating the said incident beam (10), the said sample receiving the modulated incident beam (11) and returning a measurement beam (12).
   - the means (4) to detect the measurement beam (12), producing electrical signals, and
   - a processing unit (5) receiving the electrical signals produced by the means of detection (4), **characterised so that** the polarisation modulator (6A, 6B) is included in an optical component in accordance with any one of claims 1 to 5, so that the means of detection (4) include a polarimeter producing n measured quantities ($I_1$ - $I_n$) representing the polarisation states of the measurement beam (12) and so that the processing unit (5) includes means for producing, by Fourier transform, m values for each of the n measured quantities ($I_1$ - $I_n$), with n x m ≥ 16 and m ≥ 4, providing simultaneous access to the sixteen coefficients of the Mueller matrix (M).

10. An ellipsometer according to claim 9, **characterised so that** n ≥ 4, and so that the polarimeter does not introduce any new temporal modulation.

11. An ellipsometer according to claim 10, **characterised so that** n = 4 and m = 4, and so that the polarimeter separates the four polarisation states of the measurement beam (12) associated with the said four measured quantity ($I_1$-$I_4$),

**12.** An ellipsometer according to claim 11, **characterised so that** the said optical component having been specified by any one of claims 1 to 5, the four values produced by Fourier transform for each measured quantity ($I_1$ - $I_4$), dependent on time (t), are the harmonic components of the said measured quantity ($I_1$ - $I_4$) in the base:

cos ωt, sin ωt, cos 2ωt, sin 2ωt.

**13.** An ellipsometer according to any of claims 9 to 12, **characterised so that** m harmonic calculation co-ordinates $H_\ell(t)$, dependent on time (t) being grouped together in harmonic vector H(t), the processing unit produces the m values for each of the n measured quantities ($I_h(t)$) by means of a special Fourier transform, according to which the period [0, 2π/ω) being split into 2N equally-distributed discrete points ($T_k$), and the measured quantity ($I_h(t)$) being calculated at sampling instants $t_k$, for k varying from 0 to 2N - 1, the processing unit evaluates the j-th harmonic component $B_{hj}$ of the function $I_h$ for j varying from 1 to m , and h varying from 1 to n, by:

$$B_{hj} = \frac{1}{2N} \sum_{k=0}^{2N-1} I_h(t_k) g_j(T_k)$$

the functions $g_j(t)$ being demodulation functions such that the demodulation matrix D given by:

$$D_{\ell j} = \frac{1}{2N} \sum_{k=0}^{2N-1} H_\ell(t_k) g_j(T_k)$$

for ℓ and j varying from 1 to m, is of a rank equal to 4 or above.

**14.** An ellipsometer according to claim 13, **characterised so that** with the two phase modulations applied having the same phase shift (δ(t)), we choose:

$$\delta(t_k) = \omega T k,$$

and
$$g_j(T_k) = \exp(-ij\omega T_k)$$

with $i^2 = -1$.

**15.** An ellipsometer according to claim 13, **characterised so that** we choose:

$$t_k = T_k,$$

and

$g_j$ such that D is the identity matrix.

**16.** An ellipsometer according to any of claims 9 to 15, **characterised so that** the means of detection (4) and the processing unit (5) are suitable for spectrographic measurements.

**17.** A process for calibration of the ellipsometer according to any of claims 9 to 16, **characterised so that** since the polariser (20) and the polarisation modulator (6A, 6B) constitute a polarisation states generator (3), the said polarisation states generator (3) and the said means of detection (4) respectively having a modulation matrix (W) and a detection matrix (A):

-   we choose a set of calibration identities which have known Mueller matrices (M), one of these entities being the identity matrix ($I_0$).
-   for each of the calibration entities, we adopt the said entity as a sample (1) in the ellipsometer, we emit an incident light beam (10) which is polarised linearly with the light source (2) and the polariser (20), we modulate the incident beam (10) with the coupled modulator (6A, 6B), we send the modulated incident beam (11) to the said entity (1), and return a measurement beam (12), we produce the said measured quantities ($I_1$ - $I_n$) by the means of detection (4) and the said values by the processing unit (5), and using the said values, we construct a measured matrix (AMW), which is a product of the detection matrix (A), the Mueller matrix (M) of the said entity and the modulation matrix.
-   we establish a system of linear equations from the measured matrices (AMW), and
-   we solve this system in order to extract the modulation (W) and detection (A) matrices.

**18.** A calibration process in accordance with claim 17, **characterised so that** we choose a set of entities including:

-   a linear polariser at 0° on transmission,
-   a linear polariser at 45° on transmission, and
-   a partial polariser and phase shifter without singular values.

**19.** An ellipsometric measurement process intended for measurement of a sample (1) represented by the coefficients of a Mueller matrix (M), in which:

- we emit a linearly polarised incident light beam (10),
- we modulate the incident beam (10) with a polarisation modulator (6A,6B),
- we send the modulated incident beam (11) to the sample (1), and return a measurement beam (12),
- we detect the measurement beam (12) and produce electrical signals by the means of detection (4), and
- we transmit the electrical signals to a processing unit (5),

   **characterised so that**:

- we apply two successive phase modulations to the incident beam (10) by means of a polarisation modulator (6A and 6B), the two modulations being strictly at the same frequency of $\omega/2\pi$, and being coupled by a system (23, 61, 71) which modifies the polarisation state of the light between the two modulations.
- we produce n measured quantities ($I_1$ - $I_n$) each representing a polarisation state of the measurement beam (12) using the means of detection (4).
- using a Fourier transform, we produce m values for each of the n measured quantities by means of the processing unit (5), with n x m $\geq$ 16 and m $\geq$ 4, allowing access to the sixteen coefficients of the Mueller matrix.

FIG.1

FIG.2

FIG.3

FIG.4

FIG.5

FIG.6

FIG.7

FIG.8

FIG.9